(19) Europäisches Patentamt / European Patent Office / Office européen des brevets

(11) **EP 4 304 105 A1**

(12) **EUROPEAN PATENT APPLICATION**
published in accordance with Art. 153(4) EPC

(43) Date of publication:
**10.01.2024   Bulletin 2024/02**

(21) Application number: **21928560.8**

(22) Date of filing: **05.03.2021**

(51) International Patent Classification (IPC):
***H04B 7/185*** (2006.01)

(52) Cooperative Patent Classification (CPC):
**H04B 7/185**

(86) International application number:
**PCT/CN2021/079271**

(87) International publication number:
**WO 2022/183477 (09.09.2022 Gazette 2022/36)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicants:
• **Beijing Xiaomi Mobile Software Co., Ltd.
Beijing 100085 (CN)**
• **Beijing University of Posts and
Telecommunications
Beijing 100876 (CN)**

(72) Inventors:
• **ZHU, Yajun
Beijing 100085 (CN)**
• **HONG, Wei
Beijing 100085 (CN)**
• **HU, Zeyu
Beijing 100876 (CN)**
• **LI, Yong
Beijing 100876 (CN)**

(74) Representative: **Gunzelmann, Rainer
Wuesthoff & Wuesthoff
Patentanwälte PartG mbB
Schweigerstraße 2
81541 München (DE)**

(54) **INTERFERENCE PROCESSING METHOD AND APAPRATUS, COMMUNICATION DEVICE AND STORAGE MEDIUM**

(57)     Provided in the embodiments of the present disclosure are an interference processing method and apparatus, a communication device and a storage medium. The method comprises: determining, according to system parameters of a non geostationary orbit (NGSO) satellite communication system, interference information of the NGSO satellite communication system and a ground communication system of when there is an NGSO earth station in the range of each sub-region, wherein the ground communication system comprises a plurality of base stations, and a region covered by the plurality of base stations comprises a plurality of sub-regions.

determining interference information between a non-geostationary orbit (NGSO) satellite communication system and a ground communication system in case of a presence of NGSO earth stations within a range of each of a plurality of sub-areas according to system parameters of the NGSO satellite communication system — S101

FIG. 2A

**Description**

**TECHNICAL FIELD**

The present disclosure relates to, but is not limited to, a wireless communication technical field, and more particularly to an interference processing method, an interference processing apparatus, a communication device and a storage medium.

**BACKGROUND**

In the wireless communication field, satellite communication is increasingly utilized. The satellite communication refers to communication carried out by a radio communication device on ground using satellites as relays. A satellite communication system consists of a satellite part and a ground part. The satellite communication has a large communication range and is not easily affected by land disasters. However, there is often link interference between the satellite communication system and a ground communication system (such as a 5G communication system), which affects the communication quality of the satellite communication system and the ground communication system.

**SUMMARY**

The present disclosure provides an interference processing method, an interference processing apparatus, a communication device and a storage medium.
According to a first aspect of the present disclosure, an interference processing method is provided. The method includes:
determining interference information between a non-geostationary orbit (NGSO) satellite communication system and a ground communication system in case of a presence of NGSO earth stations within a range of each of a plurality of sub-areas according to system parameters of the NGSO satellite communication system; in which the ground communication system includes a plurality of base stations, and an area covered by the plurality of base stations includes the plurality of sub-areas.
According to the interference information of the plurality of sub-areas, an access scheme between a user equipment (UE) of the ground communication system and the plurality of base stations in the area is determined.
In some embodiments, determining the interference information between the NGSO satellite communication system and the ground communication system in case of the presence of the NGSO earth stations within the range of each of the plurality of sub-areas according to the system parameters of the NGSO satellite communication system includes:

determining a transmit antenna gain of a satellite in the NGSO satellite communication system, a receive antenna gain of the NGSO ground station and a path loss of the NGSO satellite communication system according to the system parameters;
determining the interference information corresponding to a sub-area according to the transmit antenna gain, the receive antenna gain and the path loss.

In some embodiments, determining the transmit antenna gain of the satellite in the NGSO satellite communication system, the receive antenna gain of the NGSO ground station and the path loss of the NGSO satellite communication system according to the system parameters includes:

determining an off-axis angle and an azimuth angle of the satellite in the NGSO satellite communication system, and a spatial distance between the satellite and the sub-area according to the system parameters;
determining the transmit antenna gain according to the off-axis angle;
determining the receive antenna gain according to the off-axis angle and the azimuth angle;
determining the path loss according to the spatial distance.

In some embodiments, determining the spatial distance according to the system parameters includes:

determining an elevation angle of the satellite in the NGSO satellite communication system according to the system parameters;
determining the spatial distance according to the elevation angle.

In some embodiments, the system parameters include:

an instantaneous latitude and an instantaneous longitude of the satellite in the NGSO satellite communication system;
an instantaneous latitude and an instantaneous longitude of a satellite beam in the NGSO satellite communication system;
an instantaneous latitude and an instantaneous longitude of the NGSO ground station;
an orbital altitude of the satellite in the NGSO satellite communication system.

In some embodiments, the method further includes:
dividing the area covered by the plurality of base stations of the ground communication system into the plurality of sub-areas.

In some embodiments, the method further includes:
determining an access scheme between a user equipment (LTE) of the ground communication system and the plurality of base stations in the area according to the interference information of the plurality of sub-areas.

In some embodiments, determining the access scheme between the user equipment (UE) of the ground communication system and the plurality of base stations in the area according to the interference information of the plurality of sub-areas includes:

determining superimposed interference information according to the interference information corresponding to at least two NGSO satellite communication systems in the plurality of sub-areas;
determining the access scheme between the UE of the ground communication system and the plurality of base stations in the area according to the superimposed interference information.

In some embodiments, determining the superimposed interference information according to the interference information corresponding to at least two NGSO satellite communication systems in the plurality of sub-areas includes:
determining the superimposed interference information according to the interference information corresponding to the at least two NGSO satellite communication systems in the plurality of sub-areas and a distribution probability of the at least two NGSO satellite communication systems in the plurality of sub-areas.

In some embodiments, determining the access scheme between the LTE of the ground communication system and the plurality of base stations in the area according to the interference information of the plurality of sub-areas includes:

determining an interference probability corresponding to the NGSO satellite communication system and a communication link between the UE and a currently accessed base station according to the interference information of the plurality of sub-areas;
switching the base station accessed by the UE in response to the interference probability being higher than a predetermined probability threshold.

In some embodiments, switching the base station accessed by the LTE in response to the interference probability being higher than the predetermined probability threshold includes:

determining link status information in the case that the UE accesses each of the plurality of base stations in the area in response to the interference probability being higher than the predetermined probability threshold;
switching the base station accessed by the LTE according to the link status information.

In some embodiments, the area including the plurality of base stations includes a plurality of LTEs.

Determining the access scheme between the UE of the ground communication system and the plurality of base stations in the area according to the interference information of the plurality of sub-areas includes:
determining the access schemes of the plurality of UEs according to the interference information of the plurality of sub-areas, respectively.

According to a second aspect of the present disclosure, an interference processing method is provided. The method is performed by a terminal and includes:
receiving switching information for instructing the terminal to switch base stations; in which the switching information is issued by a network device according to interference information between a non-geostationary orbit (NGSO) satellite communication system and a ground communication system in case of a presence of NGSO earth stations within a range of each of sub-areas; in which the interference information is issued according to system parameters of the NGSO satellite communication system, and the interference information between the NGSO satellite communication system and the ground communication system; in which the ground communication system includes a plurality of base stations, and an area covered by the plurality of base stations includes a plurality of sub-areas.

In some embodiments, the switching information includes an access scheme between the terminal and the plurality of base stations, and the access scheme is determined by the network device according to interference information of a plurality of sub-systems.

According to a third aspect of the present disclosure, an interference processing apparatus is provided. The apparatus includes:

a first determining module configured to determine interference information between a non-geostationary orbit (NGSO) satellite communication system and a ground communication system in case of a presence of NGSO earth stations within a range of each of a plurality of sub-areas according to system parameters of the NGSO satellite communication system; in which the ground communication system includes a plurality of base stations, and an area covered by the plurality of base stations include the plurality of sub-areas.

In some embodiments, the first determining module includes:

a first determining sub-module configured to determine a transmit antenna gain of a satellite in the NGSO satellite communication system, a receive antenna gain of the NGSO ground station and a path loss of the NGSO satellite communication system according to the system parameters;
a second determining sub-module configured to determine the interference information corresponding to a sub-area according to the transmit antenna gain, the receive antenna gain and the path loss.

In some embodiments, the first determining sub-module includes:

a first determining unit configured to determine an off-axis angle and an azimuth angle of the satellite in the NGSO satellite communication system, and a spatial distance between the satellite and the sub-area according to the system parameters;
a second determining unit configured to determine the transmit antenna gain according to the off-axis angle;
a third determining unit configured to determine the receive antenna gain according to the off-axis angle and the azimuth angle;
a fourth determining unit configured to determine the path loss according to the spatial distance.

In some embodiments, the first determining unit is further configured to:

determine an elevation angle of the satellite in the NGSO satellite communication system according to the system parameters;
determine the spatial distance according to the elevation angle.

In some embodiments, the system parameters include:

an instantaneous latitude and an instantaneous longitude of the satellite in the NGSO satellite communication system;
an instantaneous latitude and an instantaneous longitude of a satellite beam in the NGSO satellite communication system;
an instantaneous latitude and an instantaneous longitude of the NGSO ground station;
an orbital altitude of the satellite in the NGSO satellite communication system.

In some embodiments, the apparatus further includes:
a dividing module configured to divide the area covered by the plurality of base stations of the ground communication system into the plurality of sub-areas.

In some embodiments, the apparatus further includes:
a second determining module configured to determine an access scheme between a user equipment (LTE) of the ground communication system and the plurality of base stations in the area according to the interference information of the plurality of sub-areas.

In some embodiments, the second determining module includes:

a third determining sub-module configured to determine superimposed interference information according to the interference information corresponding to at least two NGSO satellite communication systems in the plurality of sub-areas;
a fourth determining sub-module configured to determine the access scheme between the UE of the ground communication system and the plurality of base stations in the area according to the superimposed interference information.

In some embodiments, the third determining sub-module is further configured to:
determine the superimposed interference information according to the interference information corresponding to the at least two NGSO satellite communication systems in the plurality of sub-areas and a distribution probability of the at least two NGSO satellite communication systems in the plurality of sub-areas.

In some embodiments, the second determining module includes:

a fifth determining sub-module configured to determine an interference probability corresponding to the NGSO satellite communication system and a communication link between the LTE and a currently accessed base station according to the interference information of the plurality of sub-areas;

a switching sub-module configured to switch the base station accessed by the UE in response to the interference probability being higher than a predetermined probability threshold.

In some embodiments, the switching sub-module is further configured to:

determine link status information in the case that the UE accesses each of the plurality of base stations in the area in response to the interference probability being higher than the predetermined probability threshold;

switch the base station accessed by the LTE according to the link status information.

In some embodiments, the area including the plurality of base stations includes a plurality of LTEs.

The second determining module includes:

determining the access schemes of the plurality of UEs according to the interference information of the plurality of sub-areas, respectively.

According to a fourth aspect of the present disclosure, an interference apparatus is provided. The apparatus is to a terminal and includes:

a receiving module configured to receive switching information for instructing the terminal to switch base stations; in which the switching information is issued by a network device according to interference information between a non-geostationary orbit (NGSO) satellite communication system and a ground communication system in case of a presence of NGSO earth stations within a range of each of sub-areas; in which the interference information is issued according to system parameters of the NGSO satellite communication system, and the interference information between the NGSO satellite communication system and the ground communication system; in which the ground communication system includes a plurality of base stations, and an area covered by the plurality of base stations includes a plurality of sub-areas.

In some embodiments, the switching information includes an access scheme between the terminal and the plurality of base stations, and the access scheme is determined by the network device according to interference information of a plurality of sub-systems.

According to a fifth aspect of the present disclosure, a communication device is provided. The communication device at least includes a processor; and a memory for storing executable instructions runnable on the processor.

The processor is configured to implement steps in the interference processing method provided by any one of the above-mentioned embodiments when running the executable instructions.

According to a sixth aspect of the present disclosure, a non-transitory computer-readable storage medium is provided. The computer-readable storage medium has stored therein computer executable instructions that, when executed by a processor, cause the interference processing method provided by any one of the above-mentioned embodiments to be implemented.

Embodiments of the present disclosure provide a communication method, a communication apparatus, the communication device and the storage medium. Through the technical solutions of embodiments of the present disclosure, the area covered by the plurality of base stations is divided into the plurality of sub-areas, and the interference information between the NGSO satellite communication system and the ground communication system is respectively simulated in case of the presence of NGSO earth stations within the range of each of the plurality of sub-areas. In this way, the connection scheme between the UE and the base station is adjusted according to the interference information in each sub-area, thereby reducing the situation where the LTE receives interference from the NGSO satellite communication system during the communication process between the LTE and the base station.

**BRIEF DESCRIPTION OF THE DRAWINGS**

The accompanying drawings, which are incorporated in and constitute a part of this specification, illustrate embodiments consistent with the present disclosure and together with the specification serve to explain principles of embodiments of the present disclosure.

FIG. 1 is a schematic diagram illustrating a wireless communication system according to an illustrative embodiment.
FIG. 2A is a first schematic flowchart illustrating an interference processing method according to an illustrative embodiment.

FIG. 2B is a second schematic flowchart illustrating an interference processing method according to an illustrative embodiment.

FIG. 3 is a schematic diagram illustrating interference between an NGSO satellite communication system and a 5G ground communication system according to an illustrative embodiment.

FIG. 4 is a third schematic flowchart illustrating an interference processing method according to an illustrative embodiment.

FIG. 5 is a schematic diagram of performing rasterization processing on an area covered by a ground communication system according to an illustrative embodiment.

FIG. 6 is a schematic diagram illustrating hierarchical calibration of interference information corresponding to rasters in an area according to an illustrative embodiment.

FIG. 7 is a schematic diagram of probabilistic summarization of interference distributions in the same area corresponding to a plurality of NGSO satellite communication systems according to an illustrative embodiment.

FIG. 8 is a schematic diagram of determining an access scheme for a LTE of a ground communication system in an area according to an illustrative embodiment.

FIG. 9A is a first block diagram illustrating an interference processing apparatus according to an illustrative embodiment.

FIG. 9B is a second block diagram illustrating an interference processing apparatus according to an illustrative embodiment.

FIG. 10 is a first schematic diagram illustrating a communication device according to an illustrative embodiment.

FIG. 11 is a second schematic diagram illustrating a communication device according to an illustrative embodiment.

## DETAILED DESCRIPTION

Reference will now be made in detail to illustrative embodiments, examples of which are illustrated in the accompanying drawings. The following description refers to the accompanying drawings in which the same numbers in different drawings represent the same or similar elements unless otherwise represented. The implementations set forth in the following description of illustrative embodiments do not represent all implementations consistent with the disclosure. Instead, they are merely examples of apparatuses and methods consistent with aspects related to embodiments of the disclosure as recited in the appended claims.

Terms used in embodiments of the present disclosure are for describing some embodiments only, and are not intended to limit the embodiments of the present disclosure. As used in embodiments of the present disclosure and the appended claims, "a/an" and "the" in singular forms are also intended to include plural forms unless the context clearly indicates otherwise. It could also be understood that the term "and/or" as used herein refers to and includes any and all possible combinations of one or more associated listed items.

It could be understood that although the embodiments of the present disclosure may use the terms "first", "second", "third", etc. to describe various information, but the information is not limited to these terms. These terms are only used to distinguish information of the same type from each other. For example, without departing from the scope of embodiments of the present disclosure, first information may also be called second information, and similarly second information may also be called first information. Depending on the context, the word "if' as used herein may be interpreted as "upon" or "when" or "in response to determining".

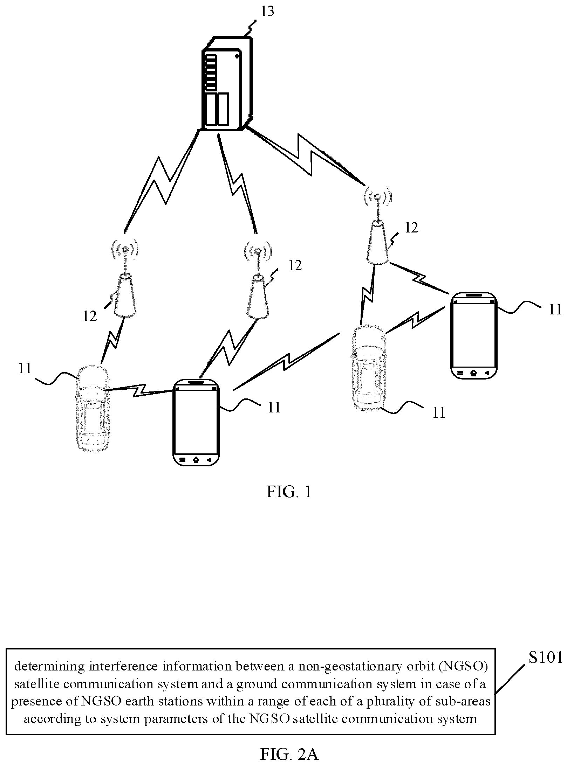

FIG. 1 is a schematic diagram illustrating a wireless communication system according to an illustrative embodiment. As shown in FIG. 1, the wireless communication system is a communication system based on cellular mobile communication technology, and the wireless communication system may include a plurality of terminals 11 and a plurality of base stations 12.

The terminal 11 may be a device that provides voice and/or data connectivity to a user. The terminal 11 may communicate with one or more core networks via a radio access network (RAN). The terminal 11 may be an Internet of Things terminal, such as a sensor device, a mobile phone (or called a "cellular" phone) and a computer having an Internet of Things terminal. For example, the terminal 11 may be a fixed, portable, pocket, hand-held, built-in computer or vehicle-mounted device. For example, the terminal 11 may be a station (STA), a subscriber unit, a subscriber station, a mobile station, a mobile, a remote station, an access point, a remote terminal, an access terminal, a user terminal, a user agent, a user device, or a user equipment (UE). Alternatively, the terminal 11 may be a device of an unmanned aerial vehicle. Alternatively, the terminal 11 may be a vehicle-mounted device, for example, a trip computer with a wireless communication function, or a wireless communication device externally connected to the trip computer. Alternatively, the terminal 11 may also be a roadside device, for example, it may be a street lamp, a signal lamp, or other roadside devices with a wireless communication function.

The base station 12 may be a network side device in a wireless communication system. The wireless communication system may be the fourth generation mobile communication technology (4G) system, also known as a long term evolution (LTE) system. Alternatively, the wireless communication system may also be the fifth generation mobile communication technology (5G) system, also called a new radio (NR) system or 5G NR system. Alternatively, the wireless communication system may also be a next generation system of the 5G system. An access network in the 5G system may be called a new generation-radio access network (NG-RAN).

The base station 12 may be an evolved base station (eNB) adopted in a 4G system. Alternatively, the base station 12 may also be a central distributed architecture base station (gNB) in the 5G system. When the base station 12 adopts a central distributed architecture, the base station 12 generally includes a central unit (CU) and at least two distributed units (DU). The central unit is provided with a protocol stack of a packet data convergence protocol (PDCP) layer, a radio link control (RLC) layer, or a media access control (MAC) layer. A protocol stack of a physical (PHY) layer is provided in the distributed unit. The specific implementation manner of the base station 12 is not be limited in embodiments of the present disclosure.

A wireless connection may be established between the base station 12 and the terminal 11 through a wireless air interface. In some embodiments, the wireless air interface is a wireless air interface based on the fourth generation mobile communication network technology (4G) standard. Alternatively, the wireless air interface is a wireless air interface based on the fifth generation mobile communication network technology (5G) standard. For example, the wireless air interface is a new radio. Alternatively, the wireless air interface may also be a wireless air interface based on a next generation mobile communication network technology standard based on 5G.

In some embodiments, an E2E (end to end) connection may also be established between terminals 11, such as a V2V (vehicle to vehicle) communication, a V2I (vehicle to infrastructure) communication and a V2P (vehicle to pedestrian) communication in vehicle to everything (V2X) communication scenes.

In some embodiments, the above-mentioned wireless communication system may further include a network management device 13.

The plurality of base stations 12 are connected to the network management device 13 respectively. The network management device 13 may be a core network device in the wireless communication system. For example, the network management device 13 may be a mobility management entity (MME) in an evolved packet core network (EPC). Alternatively, the network management device may also be other core network devices, such as a serving gate way (SGW), a public data network gateway (PGW), a policy and charging rules function unit (PCRF) or a home subscriber server (HSS). The implementation form of the network management device 13 is not limited in embodiments of the present disclosure.

The continuous emergence of new Internet applications such as a new generation of augmented reality (AR), virtual reality (VR) and vehicle-to-vehicle communication has put forward higher requirements for wireless communication technology, driving the continuous evolution of wireless communication technology to meet the needs of the applications. At present, cellular mobile communication technology is in an evolution stage of a new generation of technology. An important feature of the new generation of technology is to support flexible configuration of various service types. Because different service types have different requirements for wireless communication technologies, for example, enhanced mobile broadband (eMBB) whose service types mainly require large bandwidth and high speed; ultra-reliable and low latency communications (URLLC) whose service types mainly require high reliability and low delay; massive machine type communication (mMTC) whose service types mainly require the large number of connections. Therefore, a new generation of wireless communication systems needs a flexible and configurable design to support the transmission of various service types.

In the wireless communication technology, the satellite communication is an important aspect of future wireless communication technology development. The satellite communication refers to a communication carried out by a radio communication device on the ground using satellites as relays. The satellite communication system consists of a satellite part and a ground part. The characteristics of the satellite communication are that the communication range is large; communication may be carried out between any two points as long as the two points are within the range covered by the radio waves emitted by the satellite; it is not easily affected by land disasters (with high reliability). As a supplement to the current ground cellular communication system, the satellite communication may have the following benefits.

The first benefit is extended coverage. For areas that the current cellular communication system cannot cover or which have high coverage costs, such as oceans, deserts, remote mountainous areas, etc., the satellite communication may be used to solve communication problems.

The second benefit is emergency communication. Under the condition where the infrastructure of cellular communication is unavailable in extreme cases of disasters such as earthquakes, satellite communication may be used to quickly establish a communication connection.

The third benefit is to provide industry applications. For example, for delay-sensitive services of long-distance transmission, the satellite communication may be used to reduce the delay of service transmission.

It is foreseeable that in the future wireless communication system, deep integration of the satellite communication system and the cellular communication system on the ground will be gradually realized to truly realize the intelligent connection of all things.

The satellite Internet constellation has become the focus of the next generation of communication system with its increasingly prominent national strategic position and potential market economic value. In the satellite network, a low earth orbit (LEO) satellite is a typical NGSO satellite. Due to the advantages of transmission delay and link loss because of its small satellite-ground distance, the LEO satellite has attracted more attention from academia and industry. Frequency resources are an important basic support for the commercial use of satellite Internet, but under the affect by the "scarcity" of frequency resources, NGSO has to share some of the spectrum resources with other wireless network communication systems, that is, NGSO satellite Internet and land communication systems that are supported preferentially, such as the sharing of frequency in the 5G system. If the electromagnetic frequency cannot be well coordinated, serious co-frequency or adjacent frequency interference will occur. In view of the shortage of frequency resources, which is a key issue in the development of low-orbit satellite Internet constellations, how to propose corresponding countermeasures is the current challenge.

Based on the integration of the satellite communication system and the ground communication system, as shown in FIG. 2A, an embodiment of the present disclosure provides an interference processing method, which includes the following steps.

In step S 101, interference information between a NGSO satellite communication system and a ground communication system is determined in case of a presence of NGSO earth stations within a range of each of a plurality of sub-areas according to the system parameters of the NGSO satellite communication system.

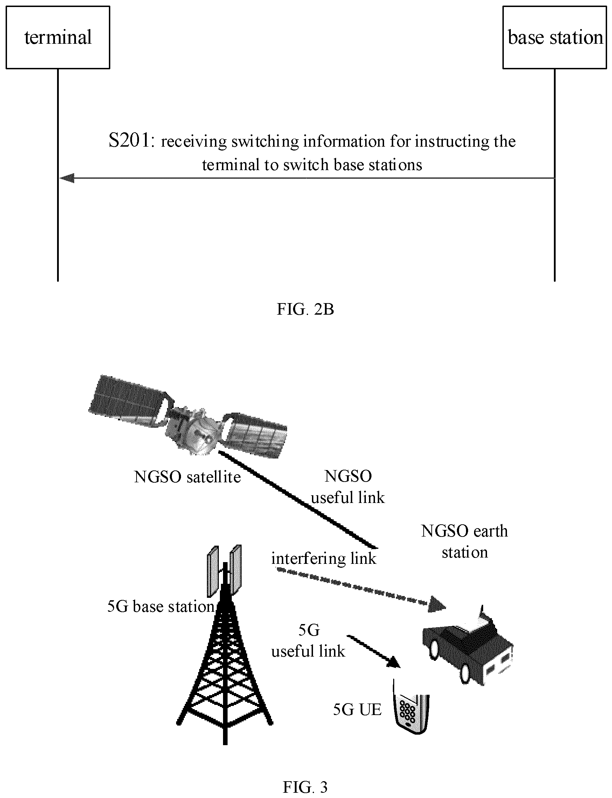

The NGSO satellite system here is mainly composed of two parts, i.e., the NGSO satellite and the NGSO earth stations for providing services. Due to its orbital characteristics, the satellite is in high-speed motion, which brings great difficulties to the NGSO system analysis. NGSO earth stations work on the surface of the Earth, and are also classified into fixed earth stations and earth stations in motion according to their mobility. The position of the fixed station relative to the surface of the Earth is determined, and the analysis is relatively easy. However, the earth station in motion needs to maintain the ability to provide services during moving, and its trajectory cannot be predicted. For the ground communication systems, such as 5G systems, the support of user mobility is also a service requirement that must be guaranteed, which means that there is overlap in the service areas between the two systems. Moreover, the two belong to two different systems, and it is hard to carry out real-time information exchange and coordination between the two systems. Therefore, NGSO earth stations in motion may appear in the coverage area of the ground communication system at any time and generate serious co-frequency or adjacent-frequency interference with the ground communication system. As shown in FIG. 3, it is a typical interference scenario between the NGSO communication system and the 5G system.

In other embodiments, inter-system interference is reduced through processes, such as setting a protection distance, frequency hopping, beam closing and power control. However, these processes cannot be well applied to the interference elimination between the ground communication system and the NGSO satellite communication system. Since the location information and frequency usage rules between the systems cannot be interacted in real time, solutions such as setting the protection distance and frequency hopping cannot be realized. Solutions such as beam closing and power control are at the cost of sacrificing system performance, and cannot guarantee that normal services may be provided to users.

Unlike relatively static position information of a traditional GSO, the position information of the NGSO satellites is in dynamic change, and the changing position information will complicate the interference avoidance strategy. Based on the above considerations, satellite ephemeris data may be imported into the 5G system in advance, and a 5G base station cluster may predict potential interference, such that the process of space isolation or frequency coordination may be used in advance to reduce the interference of the ground 5G to satellites. For the earth station in motion, the complexity of the problem is that the information of the satellite ground station cannot be known in advance. Therefore, only a regional interference prediction process based on probability may be used to avoid it. That is, in a cluster composed of 5G base stations, assuming that NGSO earth stations appear within the coverage of the cluster with a certain probability, it is considered that places with a high probability of interference need to be closed, otherwise, there is no need to operate. It is worth noting that since all kinds of information about the ground stations are unknown, there is a need to traverse the possibility of occurrence of all NGSO earth stations by means of enumeration, and then comprehensively obtain potential interference results.

In embodiments of the present disclosure, the area including the plurality of base stations may be an area covered by one base station cluster. Before analysis, the system parameters of the NGSO satellite communication system may be imported to the plurality of base stations in the base station cluster, or imported to an overall management device of the base stations in the area, for example, one base station in the base station cluster. That is to say, an execution subject that executes the above-mentioned steps may be any one of the plurality of base stations, or may be other devices other than the above-mentioned plurality of base stations.

The system parameters may include the related parameters of the satellites in the NGSO satellite communication system, the related parameters of the NGSO earth stations, and their link establishment strategies, frequency usage schemes and other information. In addition, the system parameters may also include related parameters of the ground communication system, such as related parameters of the above-mentioned plurality of base stations, link establishment parameters between the base station and the UE, and the like.

In embodiments of the present disclosure, the area containing the plurality of base stations includes the plurality of sub-areas, and the plurality of sub-areas may be divided into the plurality of sub-areas of the same size and shape in a raster manner, or may be divided into irregular sub-areas according to the distribution and coverage of the base stations. Here, the area containing the plurality of base stations may be the area covered by the plurality of base stations or base station clusters.

Since the position of the NGSO earth station is not fixed and unknown, here, by assuming that there is an NGSO earth station in the sub-area, the interference information between the NGSO satellite communication system and the ground communication system is calculated. For example, in case of a presence of NGSO earth stations within the sub-areas, according to the system parameters of the NGSO earth station and the NGSO satellite communication system, the interference probability and the interference degree between the NGSO satellite communication system and the ground communication system are calculated.

After each sub-area is processed to obtain the above-mentioned interference information, the interference degree between the two systems in different sub-areas may be compared according to the interference information, so as to facilitate the adjustment of the access scheme between the UE and the base station in the ground communication system.

For example, if the probability of receiving interference from the NGSO satellite communication system in the sub-area where the current UE accesses the base station is high, or the probability of being severely interfered is high, the access scheme of the UE may be adjusted, such as re-accessing to the base stations of the adjacent cell or the like.

In this way, by discretizing the space and estimating an interference status of each sub-area, on the one hand, the possible interference in the whole region may be estimated without knowing the real-time position and communication link status of the NGSO satellite communication system and the NGSO earth stations; on the other hand, it is convenient to adjust the access scheme of the ground communication system in time, so as reduce the possibility of interference, and improve communication quality and system stability.

An embodiment of the present disclosure provides an interference processing method, and the method includes:

determining a transmit antenna gain of a satellite in the NGSO satellite communication system, a receive antenna gain of the NGSO ground station and a path loss of the NGSO satellite communication system according to the system parameters;

determining the interference information corresponding to a sub-area according to the transmit antenna gain, the receive antenna gain and the path loss.

Here, the system parameters may include related parameters of satellites in the NGSO satellite communication system and parameters of signal transmission by satellites. In embodiments of the present disclosure, the ground communication system may be used as a disturbing system, and the NGSO satellite communication system may be used as a disturbed system. For example, in the 5G communication system, the 5G base station is used as a transmitter of the disturbing system, and the 5G user equipment is used as a receiver of the disturbing system. The NGSO satellite is a transmitter of the disturbed system, and the NGSO earth station is a receiver of the disturbed system. Then, the interference between the two systems may be determined by transmitter power, antenna gain, receiver antenna gain, path loss, and the like.

In embodiments of the present disclosure, it is considered that the parameters of the ground communication system are fixed. Here, the parameters of the ground communication system are determined according to the transmitter power of the NGSO satellite communication system, that is, the NGSO satellite, the antenna gain, and the receiver antenna gain of the NGSO ground station. A calculation process of the interference may be the formula (1-1) as follows:

$$I = P + G_{trs} + G_{rcv} + L \qquad (1\text{-}1)$$

where P represents a transmitter power, $G_{trs}$ represents a transmit antenna gain, $G_{rcv}$ represents a receive antenna gain, and L represents a path loss.

Through the above-mentioned system parameters of the NGSO satellite communication system, the interference information may be determined, so as to further determine the access scheme of the ground communication system LTE in the corresponding sub-area.

It is noted that since the location of each sub-area is different, in case of a presence of NGSO ground stations in different sub-areas, the relative positions of the NGSO ground stations and the NGSO satellites are also different. Therefore, the above-mentioned formula for calculating interference has different parameters according to different relative positions, so as to obtain different calculation results.

In some embodiments, determining the transmit antenna gain of the satellite in the NGSO satellite communication system, the receive antenna gain of the NGSO ground station and the path loss of the NGSO satellite communication system according to the system parameters includes:

determining an off-axis angle and an azimuth angle of the satellite in the NGSO satellite communication system, and a spatial distance between the satellite and the sub-area according to the system parameters;
determining the transmit antenna gain according to the off-axis angle;
determining the receive antenna gain according to the off-axis angle and the azimuth angle;
determining the path loss according to the spatial distance.

Here, the system parameters may include the relative position of the satellite and the Earth, and the related parameters of the satellite orbit in the NGSO satellite communication system. Thus, according to the system parameters and the position (the divided sub-area position) of the NGSO ground station, parameters such as the distance and the azimuth angle of the satellite relative to the NGSO ground station may be determined.

A process of determining the above-mentioned interference information needs to know the above-mentioned transmitter power, the transmit antenna gain, the receive antenna gain, etc. corresponding to the sub-area where the NGSO ground station is located. According to characteristics of the NGSO satellite system and characteristics of the 5G system, the transmit antenna gain is related to the off-axis angle of the satellite transmit antenna, while the receive antenna gain is related to both the off-axis angle and the azimuth angle. The path loss is related to the spatial distance. That is, the above-mentioned formula (1-1) may be expressed as the following formula (1-2):

$$I = P + G_{trs}(\phi) + G_{rcv}(\phi, \psi) + L(d) \qquad (1\text{-}2)$$

where $\varphi$ represents an off-axis angle, $\psi$ represents an azimuth angle, d represents a spatial distance, and P is a fixed value.

Therefore, in embodiments of the present disclosure, the off-axis angle, the azimuth angle, and the spatial distance of the above-mentioned satellite antenna may be determined according to the parameters related to the relative positions of the satellite and the NGSO ground station in the system parameters. Then, the corresponding antenna gain and the path loss are determined according to these parameters.

For example, the off-axis angle $\varphi$ may be determined by the following formula (1-3) to formula (1-6):

$$\phi = \arccos\left[\frac{d^2_{\text{beam2sat}} + d^2_{es2sat} - d^2_{beam2es}}{2 d_{\text{beam2sat}} d_{es2sat}}\right] \qquad (1\text{-}3)$$

$$d_{\text{es2sat}} = \sqrt{R_e{}^2 + (h + R_e)^2 - 2 R_e (h + R_e)(\sin \varphi_u \sin \varphi_s + \cos \varphi_u \cos \varphi_s \cos(\lambda_u - \lambda_s))} \qquad (1\text{-}4)$$

$$d_{\text{beam2sat}} = \sqrt{R_e{}^2 + (h + R_e)^2 - 2 R_e (h + R_e)(\sin \varphi_b \sin \varphi_s + \cos \varphi_b \cos \varphi_s \cos(\lambda_b - \lambda_s))} \qquad (1\text{-}5)$$

$$d_{\text{beam2es}} = \sqrt{2 R_e{}^2 - 2 R_e{}^2 (\sin \varphi_b \sin \varphi_u + \cos \varphi_b \cos \varphi_u \cos(\lambda_b - \lambda_u))} \qquad (1\text{-}6)$$

where $(\lambda_u, \varphi_u)$ represents an instantaneous longitude and an instantaneous latitude of a NGSO ground station; $(\lambda_s, \varphi_s)$ represents an instantaneous longitude and an instantaneous latitude of a satellite; $(\lambda_b, \varphi_b)$ represents an instantaneous longitude and an instantaneous latitude of a satellite beam; $R_e$ represents a radius of the Earth, which is 6378Km; h represents an orbital height of a NGSO satellite.

The above-mentioned azimuth angle $\psi$ may be determined by the following formula (1-7) or formula (1-8):

when $\lambda_s - \lambda_u > 0$, the azimuth angle $\psi$ at the NGSO earth station is:

$$\psi = \arccos\left[\frac{\sin \varphi_s - \sin \varphi_u (\sin \varphi_s \sin \varphi_u + \cos \varphi_s \cos \varphi_u \cos(\lambda_s - \lambda_u))}{\cos \varphi_u \sqrt{1 - (\sin \varphi_s \sin \varphi_u + \cos \varphi_s \cos \varphi_u \cos(\lambda_s - \lambda_u))^2}}\right] \qquad (1\text{-}7)$$

when $\lambda_s - \lambda_u < 0$, the azimuth angle $\psi$ at the NGSO earth station is:

$$\psi = \arccos[\frac{\sin \varphi_u - \sin \varphi_s (\sin \varphi_s \sin \varphi_u + \cos \varphi_s \cos \varphi_u \cos(\lambda_s - \lambda_u))}{\cos \varphi_s \sqrt{1 - (\sin \varphi_s \sin \varphi_u + \cos \varphi_s \cos \varphi_u \cos(\lambda_s - \lambda_u))^2}}] \qquad (1\text{-}8)$$

Therefore, as long as the position information of the satellites and the NGSO ground stations in the NGSO satellite communication system may be obtained through the system parameters, the interference information in each sub-area may be calculated through formulas, so as to further obtain the distribution of interference in the entire area.

In some embodiments, determining the spatial distance according to the system parameters includes:

determining an elevation angle of the satellite in the NGSO satellite communication system according to the system parameters;
determining the spatial distance according to the elevation angle.

The path loss needs to be determined during the above-mentioned calculation of the interference. The path loss is related to the spatial distance from the satellite to the NGSO earth station, and the spatial distance may be determined by the elevation angle of the satellite relative to the NGSO ground station.

Therefore, in embodiments of the present disclosure, the elevation angle of the satellite may also be determined through the system parameters, and the spatial distance may be calculated according to the elevation angle.

For example, the elevation angle may be determined by the following formula (1-9):

$$\theta = \arctan[\frac{\sin \varphi_u \sin \varphi_s + \cos \varphi_u \cos \varphi_s \cos(\lambda_u - \lambda_s) - \dfrac{R_e}{h + R_e}}{\sqrt{1 - (\sin \varphi_u \sin \varphi_s + \cos \varphi_u \cos \varphi_s \cos(\lambda_u - \lambda_s))^2}}] \qquad (1\text{-}9)$$

In this way, the spatial distance between the satellite and the NGSO ground station may be calculated through the elevation angle and orbital altitude of the satellite, so as to determine the above-mentioned path loss.

In some embodiments, the system parameters include:

an instantaneous latitude and an instantaneous longitude of the satellite in the NGSO satellite communication system;
an instantaneous latitude and an instantaneous longitude of a satellite beam in the NGSO satellite communication system;
an instantaneous latitude and an instantaneous longitude of the NGSO ground station; and
an orbital altitude of the satellite in the NGSO satellite communication system.

The above-mentioned system parameters may include the position parameters of the satellite and the NGSO ground station in the NGSO satellite communication system, that is, the instantaneous latitude and the instantaneous longitude of the satellite, the instantaneous latitude and the instantaneous longitude of the satellite beam, the instantaneous latitude and the instantaneous longitude of the ground station, and the orbital altitude of the satellite.

It is noted that the instantaneous latitude and the instantaneous longitude of the NGSO ground station may be the longitude and the latitude of the location of the divided sub-area. Since the location of the NGSO ground station cannot be obtained in real time, a process used here assumes that there are the NGSO ground stations in the sub-area to estimate interference. Therefore, the location of the NGSO ground station here is the location of the sub-area.

The location of the sub-area may be a geometric center of each sub-area, or a position determined according to predetermined rules, for example, a location with heavy communication such as a location with the largest number of users of the ground communication system in each sub-area and.

In this way, the interference information in each sub-area may be calculated through the above-mentioned system parameters, and then it is convenient to adjust the access scheme of the ground communication system to reduce the probability of interference to the NGSO satellite communication system and the ground communication system.

An embodiment of the present disclosure provides an interference processing method, and the method includes: dividing the area covered by the plurality of base stations of the ground communication system into the plurality of sub-areas.

In embodiments of the present disclosure, the area containing the plurality of base stations is divided into the plurality of sub-areas. The division process may be dividing the area into the plurality of sub-areas with the same size and shape in the form of a raster, or may be dividing the area into irregular sub-areas according to the distribution and coverage of the base stations.

Since the position of the NGSO earth station is not fixed and unknown, after dividing the sub-area, the interference information between the NGSO satellite communication system and the ground communication system may be calculated by assuming that there is an NGSO earth station in the sub-area. For example, in case of the presence of the NGSO earth stations within the sub-areas, according to the system parameters of the NGSO earth station and the NGSO satellite communication system, the interference probability and the interference degree between the NGSO satellite communication system and the ground communication system are calculated.

In this way, by dividing the area covered by the plurality of base stations, it is convenient to determine the possible distribution of the interference in the entire area through the analysis of each sub-area, thereby reducing the problem that the interference status cannot be determined due to the unfixed position of the NGSO earth station.

An embodiment of the present disclosure provides an interference processing method, and the method includes: determining an access scheme between a user equipment (LTE) of the ground communication system and the plurality of base stations in the area according to the interference information of the plurality of sub-areas.

After each sub-area is processed to obtain the above-mentioned interference information, the interference degree between the two systems in different sub-areas may be compared according to the interference information, so as to facilitate the adjustment of the access scheme between the UE and the base station in the ground communication system.

For example, if the probability of receiving interference from the NGSO satellite communication system in the sub-area where the current UE accesses the base station is high, or the probability of being severely interfered is high, the access scheme of the UE may be adjusted, such as re-accessing to the base stations of the adjacent cell or the like.

In this way, through the interference information of each sub-area in the area, the interference of the communication link between the UE and the base station with the NGSO satellite communication system may be regulated as a whole, and a more complete base station reselection strategy is provided, which reduces the probability of mutual interference between the two systems in the area.

An embodiment of the present disclosure provides an interference processing method, and the method includes:

determining superimposed interference information according to the interference information corresponding to at least two NGSO satellite communication systems in the plurality of sub-areas;
determining the access scheme between the UE of the ground communication system and the plurality of base stations in the area according to the superimposed interference information.

Considering that the satellite revolves around the Earth, the coverage scope may change at any time. Therefore, there may be the plurality of NGSO satellite communication systems affected in the same area.

In embodiments of the present disclosure, the plurality of NGSO satellite communication systems may be analyzed respectively, and the interference information corresponding to each NGSO satellite communication system in each sub-area may be determined. Then, the interference information of the plurality of NGSO satellite communication systems is superimposed to obtain the superimposed interference information.

For example, for an NGSO satellite communication system, by determining the interference information in each sub-area, the distribution of the interference information of the NGSO satellite communication system in the area of the above-mentioned plurality of base stations may be obtained. If there are the plurality of NGSO satellite communication systems that may affect the area, the distribution of the interference information of each NGSO satellite communication system in the area may be determined respectively.

Then, the interference information of the plurality of NGSO satellite communication systems in the area may be superimposed to form an overall distribution of interference statuses between all NGSO satellite communication systems and the ground communication system. For each sub-area, it is the superposition of the interference information corresponding to each NGSO satellite communication system in the sub-area.

The above-mentioned superimposed interference information is used to indicate the interference status between the plurality of NGSO satellite communication systems as a whole and the ground communication system.

For the ground communication system, the access scheme is re-determined based on the superimposed interference information. In this way, the interference between the ground communication system and the plurality of NGSO satellite communication systems may be simultaneously reduced, and the stability of each communication system may be improved as a whole.

In some embodiments, determining the superimposed interference information according to the interference information corresponding to at least two NGSO satellite communication systems in the plurality of sub-areas includes: determining the superimposed interference information according to the interference information corresponding to the at least two NGSO satellite communication systems in the plurality of sub-areas and a distribution probability of the at least two NGSO satellite communication systems in the plurality of sub-areas.

For the same area, the coverage of the plurality of NGSO satellite communication systems may be different. For example, coverage duration, coverage probability and sub-areas covered by different NGSO satellite communication systems in the same area may be different. Therefore, for each sub-area in the above-mentioned area, the superimposed interference information may be determined according to the distribution probabilities of different NGSO satellite communication systems. For example, for each NGSO satellite communication system, interference information in a sub-area is determined, and then the corresponding distribution probability is used as the weight of the interference information of the NGSO satellite communication system. In this way, the weighted interference information of the plurality of NGSO satellite communication systems in each sub-area is superimposed, so as to obtain more accurate distribution of the interference statuses as a whole.

In some embodiments, an interference processing method is provided, and the method includes:

> determining an interference probability corresponding to the NGSO satellite communication system and a communication link between the UE and a currently accessed base station according to the interference information of the plurality of sub-areas;
> switching the base station accessed by the UE in response to the interference probability being higher than a predetermined probability threshold.

Here, the area covered by the plurality of base stations is divided into the plurality of sub-areas. The interference information of the NGSO satellite communication system and the ground communication system in each sub-area may determine the distribution of the interference information in the area. The UEs within the area covered by the above-mentioned plurality of base stations form a communication link of the ground communication system with the base stations, and mutual interference may occur between the communication link and the NGSO satellite communication system. Therefore, based on the above-mentioned interference information, it is possible to determine the interference probability corresponding to the communication link between the UE and the currently accessed base station with the NGSO satellite communication system, and the corresponding interference probability information when the LTE establishes a communication link with other base stations.

For example, the UE may establish a communication link with any one of the n base stations in the area of the above-mentioned plurality of base stations, and the interference probabilities corresponding to the communication links between the LTE and the n base stations are different. If the interference probability corresponding to the communication link between the UE and the currently accessed base station is small, that is, less than the above-mentioned probability threshold, the communication between the UE and the base station will cause less interference to the NGSO satellite communication system. Thus, the current communication link may be maintained.

If the interference probability corresponding to the base station currently accessed by the UE is higher than the predetermined probability threshold, the communication link between the current UE and the base station may have greater interference with the NGSO satellite communication system. At this time, the LTE may be switched to access the base station. Therefore, the UE may be switched to other base stations except the current base station among the above-mentioned n base stations. Of course, if a communication link is established between the switched base station and the UE, the corresponding interference probability is lower than the above-mentioned probability threshold. At the same time, upon the selection of the switched base station, service quality, signal strength, and congestion of the communication link through which the UE accesses the base station may also be considered. Therefore, a more suitable base station is found for re-access.

In an embodiment, the base station currently accessed by the UE may be used as an execution entity, and according to the distribution of the interference information in the area, the interference probability of generating mutual interference of the communication link between itself and the UE with the NGSO satellite communication system is determined. If the interference probability is higher than the preset threshold, the UE is instructed to switch the base station. At this time, the UE may select the base station for re-access according to the predetermined cell reselection strategy or the signal strength of the base station.

In another embodiment, a network device may be used to comprehensively manage the plurality of base stations in the above-mentioned area. The network device may be independent from the above-mentioned plurality of base stations, and may also be disposed in any one of the above-mentioned plurality of base stations. Therefore, the network device may act as the execution entity. According to the distribution of the interference information in the above-mentioned area, the corresponding interference probability may be determined in case of a presence of a communication link between the LTE and each base station. The base station with an interference probability less than the preset threshold is selected as a target base station that may be switched by the UE. The LTE is instructed to switch into the target base station, or the base station that the LTE has currently accessed is instructed to send an instruction to switch base stations to the UE, and so on.

In some embodiments, switching the base station accessed by the UE in response to the interference probability being higher than the predetermined probability threshold includes:

determining link status information in the case that the UE accesses each of the plurality of base stations in the area in response to the interference probability being higher than the predetermined probability threshold;

switching the base station accessed by the LTE according to the link status information.

In embodiments of the present disclosure, the base station to be switched may be selected according to the link status information of the connection between the UE and the base station. The link status information is information that characterizes communication quality after the UE accesses the base station, and may include the signal strength, bandwidth, delay, and congestion status of the base station accessed by the UE. By selecting a base station with a better link condition for the UE, on the one hand, the mutual interference between the NGSO satellite communication system and the ground communication system may be reduced, and on the other hand, the communication quality between the UE and the base station may be maintained or even improved.

In some embodiments, the area including the plurality of base stations includes a plurality of LTEs.

Determining the access scheme between the UE of the ground communication system and the plurality of base stations in the area according to the interference information of the plurality of sub-areas includes:

determining the access schemes of the plurality of UEs according to the interference information of the plurality of sub-areas.

For the ground communication system, each base station may be used to provide services for the plurality of UEs. Therefore, for the area covered by the above-mentioned plurality of base stations, it is possible to need to determine the access scheme for the plurality of UEs, thereby reducing the interference of the ground communication system with the NGSO satellite communication system overall.

Therefore, in embodiments of the present disclosure, a polling process may be used to sequentially determine the access scheme of each LTE according to the interference information of each sub-area, so as to adjust an overall access performance of each communication system in the area in real time.

An embodiment of the present disclosure also provides an interference processing method. As shown in FIG. 2B, the method is performed by a terminal, and the method includes the following step.

In step S201, switching information for instructing the terminal to switch base stations is received. The switching information is issued by a network device according to interference information between a non-geostationary orbit (NGSO) satellite communication system and a ground communication system in case of a presence of NGSO earth stations within a range of each of sub-areas. The interference information is issued according to system parameters of the NGSO satellite communication system, and the interference information between the NGSO satellite communication system and the ground communication system. The ground communication system comprises a plurality of base stations, and an area covered by the plurality of base stations comprises a plurality of sub-areas.

Here, the terminal is a terminal that may receive the network service of the ground communication system, which includes, but is not limited to, the terminal used in the 4G or 5G communication system, including the UE involved in any one of the above-mentioned embodiments, such as a mobile phone. In addition, the terminal may also have the ability to receive services from the NGSO satellite communication system.

The NGSO satellite system here is mainly composed of two parts, i.e., the NGSO satellite and the NGSO earth stations for providing services. Due to its orbital characteristics, the satellite is in high-speed motion, which brings great difficulties to the NGSO system analysis. NGSO earth stations work on the surface of the Earth, and are also classified into fixed earth stations and earth stations in motion according to their mobility. The position of the fixed station relative to the surface of the Earth is determined, and the analysis is relatively easy. However, the earth station in motion needs to maintain the ability to provide services during moving, and its trajectory cannot be predicted. For the ground communication systems, such as 5G systems, the support of user mobility is also a service requirement that must be guaranteed, which means that there is an overlap in the service areas between the two systems. Moreover, the two belong to two different systems, and it is hard to carry out real-time information exchange and coordination between the two systems. Therefore, NGSO earth stations in motion may appear in the coverage area of the ground communication system at any time and generate serious co-frequency or adjacent-frequency interference with the ground communication system.

Based on this, in embodiments of the present disclosure, it is possible to determine whether there is a large possibility of interference of the communication link between the current terminal and the base station with the NGSO satellite communication system according to the interference information between the NGSO satellite communication system and the ground communication system in the plurality of sub-areas, thereby receiving the switching information, and re-accessing other base stations based on the switching information.

In this way, when the terminal accesses the base station, the possible interference between the NGSO satellite communication system and the ground communication system may be considered, so as to import into the base station with the lower possibility of the above-mentioned interference as much as possible, thereby improving the communication quality of the terminal in the ground communication system, while reducing the interference of the communication link between the terminal and the base station to the NGSO satellite communication system. For terminals that may accept the service of the NGSO satellite communication system, they may get better service quality in both the NGSO satellite communication system and the ground communication system.

In some embodiments, the switching information includes an access scheme between the terminal and the plurality of base stations, and the access scheme is determined by the network device according to the interference information of the plurality of subsystems.

Here, the above-mentioned switching information may include the access scheme of the terminal within the range of the plurality of base stations, or may be limited to the access scheme of the terminal between the currently accessed base station and the base stations that may be accessed in its neighboring cells. The terminal sends an access request to the base station to be switched according to the switching information, and accesses the base station.

In embodiments of the present disclosure, the network device determines the base station whose interference probability is lower than a predetermined threshold as the base station that the terminal may access according to the interference information of the NGSO satellite service system with the communication link between the base station currently accessed by the terminal and other base stations. The base station switched by the terminal may be further determined according to the capabilities (such as signal quality, congestion status, bandwidth, delay, etc.) of these base stations that may provide services to the terminal. Of course, if the base station currently accessed by the terminal satisfies the condition where the interference probability is lower than the predetermined threshold and may obtain communication services that meet the requirements, the terminal may not perform switching and maintain the communication connection with the currently accessed base station.

Embodiments of the present disclosure also provide the following examples.

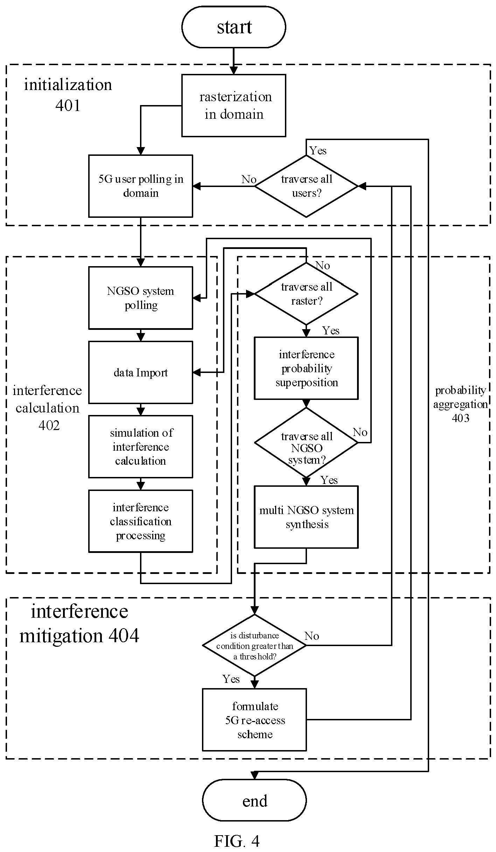

In embodiments of the present disclosure, for a base station cluster composed of the plurality of ground 5G base stations, inherent information of the satellite system is imported into the cluster in advance, such as NGSO satellite Internet satellite orbits, a position distribution probability of the NGSO satellite Internet earth stations in motion with interference in the cluster, a NGSO satellite Internet satellite-to-ground link establishment strategy, and a frequency usage scheme of the satellite-ground link. Then, the operation of the satellite in the 5G base station cluster is simulated for probability prediction, so as to process the potential interference with high probability and high harm, and slow down the interference between the ground 5G system and the NGSO satellite system as much as possible. FIG. 4 shows a flow chart of an inter-system interference processing method which may be generally divided into four main parts: initialization 401, interference calculation 402, probability aggregation 403, and interference mitigation 404.

The above-mentioned interference processing method is mainly implemented by a base station cluster composed of the plurality of base stations in the ground 5G system. In this process, a space in a domain is first rasterized, that is, the above-mentioned area is divided into the plurality of sub-areas. Then, the scenarios where each NGSO satellite earth station in motion appears in each raster (sub-area) is simulated, so as to calculate the degree of interference harm to the 5G system caused by the presence of NGSO earth stations in motion in the raster, and aggregate the probability of multi-system and multi-raster, thereby obtaining a key area where the earth station in motion has a high probability of occurrence and causes a high degree of interference. Interference mitigation measures such as re-access are performed on the UEs in the key areas, so as to reduce the possibility of serious interference harm between the two systems as much as possible.

For the above-mentioned initialization 401:

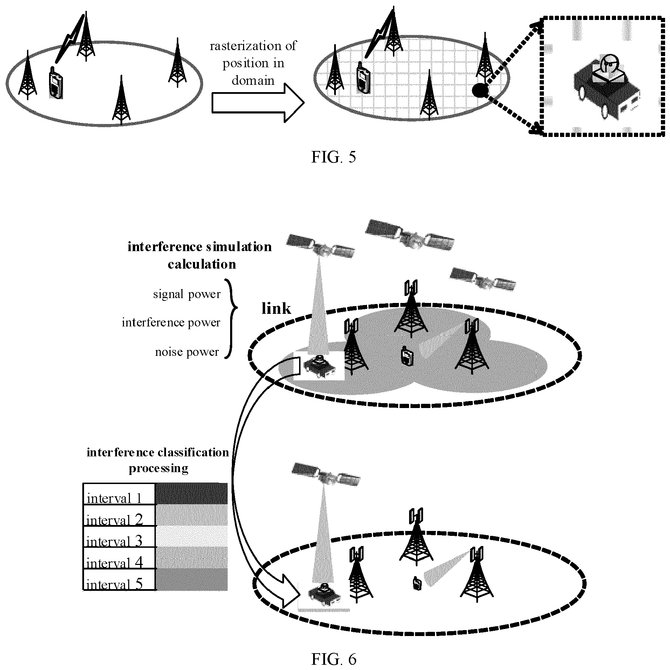

The main object is the interference between the ground 5G system and the NGSO satellite communication system. Since the position of the 5G base station is relatively fixed, in the present method, the base station cluster composed of the plurality of 5G base stations is selected as the execution object, that is, the scope of the domain covered by the cluster composed of a group of 5G base stations as shown in FIG. 5. Since there are a large number of movable NGSO earth stations in the NGSO satellite communication system, the position and time of the NGSO earth stations will affect the satellite selection and link establishment strategy. The orbits of the NGSO satellites and the orbits of the earth stations are unknown, and time and space may be first discretized. During each sampling period, position parameters of the operating orbit of the satellite Internet satellites at the current moment and other information may be obtained from official data submitted by each NGSO satellite Internet company, thereby calculating the operating position of the NGSO satellite at the current moment. For the uncertainty of the position of the NGSO earth station in motion (hereinafter referred to as the earth station in motion), the domain is divided into a plurality of rasters at equal intervals, and a position of a center point of each raster refers to all positions within the entire raster. Based on this rasterization process, spatial discretization is completed, and the rasterization process is shown in FIG 5.

After discretizing the spatial position by rasterizing, the smallest unit of each operation is obtained. That is, for a certain 5G user within a certain period of time, assuming that the earth station in motion appears in a certain raster, the interference scene between the two systems is analyzed. Since the present disclosure only studies the interference situation between communication systems, the user carrying capacity and scheduling methods of 5G base stations are assumed by the classical manners without too much in-depth exploration. In the 5G system, 5G system information in the domain such as user location, frequency usage, and position of the base station may be regarded as known, and through rasterization, the position of the ground station in motion in the NGSO satellite communication system (cyclic calculation for each raster), the NGSO satellite communication system satellite serving the raster (the satellite orbit is known, the link establishment strategy is known), and the frequency usage status may be set to be determined. Therefore, the information related to the operating link of the two systems (the NGSO satellite communication system assumes that the earth station in motion is present in the raster, rather than actually confirming presence) is determined, and the interference between the two communication systems may be estimated accordingly.

For the above-mentioned interference calculation 402:

The main task of the interference calculation is to calculate the interference status of the current 5G system link in case of a presence of the earth station in motion in the raster based on the current simulated link status, and calibrate the value to the current raster.

For a certain raster, there is a need to poll different NGSO satellite communication systems, because the different NGSO satellite communication systems have different link establishment strategies and frequency usage conditions of the earth stations, and the system to which the earth station belongs, information such as whether it appears, when it appears, and whether it operates cannot be obtained by the 5G base station cluster in real time. Therefore, there is a need to count all the NGSO satellite communication systems that may appear in the raster again one by one. During each time of polling, it may be considered that the above-mentioned information has been confirmed.

After the information is determined, the link information data in the two systems may be imported, and the data to be imported may include the contents shown in Table 1 below.

Table 1

| imported information | | |
|---|---|---|
| serial number | names of inherent parameters of NGSO satellite constellations | unit |
| 1 | number of NGSO satellite constellations | piece |
| 2 | six orbital elements of each constellation | |
| 3 | geographic coordinates of an earth station at a central point within a current raster | [degree, degree, meter] |
| 4 | link establishment strategy between NGSO satellites and earth stations in the system | |
| 5 | frequency usage information assigned to NGSO satellite constellation | hertz |
| 6 | antenna parameters of NGSO satellites and earth stations in the system | |
| 7 | minimum elevation angle of satellite-ground link establishment | degree |
| 8 | satellite sampling period | second |
| 9 | geographic coordinates of current 5G base station | [degree, degree, meter] |
| 10 | geographic coordinates of current serving 5G user | [degree, degree, meter] |
| 11 | frequency information assigned to 5G user | hertz |
| 12 | 5G system base station and user antenna parameters | |

According to the imported information, an interference scenario is established. In this scenario, the transmitter of the disturbing system is a 5G base station, the receiver of the disturbing system is a 5G user, the transmitter of the disturbed system is an NGSO satellite, and the receiver of the disturbed system is an NGSO earth station. The interference calculation process refers to the following formula (2-1):

$$I = P + G_{trs}(\phi) + G_{rcv}(\phi, \psi) + L(d) \qquad (2\text{-}1)$$

where P represents a transmitter power, which is a fixed value in this scenario; $G_{trs}(\varphi)$ represents a transmitter antenna gain, which is related to an off-axis angle of transmission; $G_{rcv}(\varphi, \psi)$ represents a receiver antenna gain, which is related to both an off-axis angle and an azimuth angle based on the characteristics of the 5G system; L(d) represents a path loss, which is considered as a free space loss here, so it is only related to the spatial distance. The off-axis angle may be determined by the following formulas (2-2) to (2-5):

$$\phi = \arccos[\frac{d^2_{beam2sat} + d^2_{es2sat} - d^2_{beam2es}}{2d_{beam2sat}d_{es2sat}}] \tag{2-2}$$

$$d_{es2sat} = \sqrt{R_e^2 + (h + R_e)^2 - 2R_e(h + R_e)(\sin\varphi_u \sin\varphi_s + \cos\varphi_u \cos\varphi_s \cos(\lambda_u - \lambda_s))} \tag{2-3}$$

$$d_{beam2sat} = \sqrt{R_e^2 + (h + R_e)^2 - 2R_e(h + R_e)(\sin\varphi_b \sin\varphi_s + \cos\varphi_b \cos\varphi_s \cos(\lambda_b - \lambda_s))} \tag{2-4}$$

$$d_{beam2es} = \sqrt{2R_e^2 - 2R_e^2(\sin\varphi_b \sin\varphi_u + \cos\varphi_b \cos\varphi_u \cos(\lambda_b - \lambda_u))} \tag{2-5}$$

where $(\lambda_u, \varphi_u)$ represents an instantaneous longitude and an instantaneous latitude of a ground station; $(\lambda_s, \varphi_s)$ represents an instantaneous longitude and an instantaneous latitude of a satellite; $(\lambda_b, \varphi_b)$ represents an instantaneous longitude and an instantaneous latitude of a satellite beam; $R_e$ represents a radius of the Earth, which is 6378Km; h represents an orbital height of a NGSO satellite.

The azimuth angle is determined by the following formulas.

When $\lambda_s - \lambda_u > 0$, the azimuth angle $\psi$ at the earth station is:

$$\psi = \arccos[\frac{\sin\varphi_s - \sin\varphi_u(\sin\varphi_s \sin\varphi_u + \cos\varphi_s \cos\varphi_u \cos(\lambda_s - \lambda_u))}{\cos\varphi_u\sqrt{1 - (\sin\varphi_s \sin\varphi_u + \cos\varphi_s \cos\varphi_u \cos(\lambda_s - \lambda_u))^2}}] \tag{2-6}$$

When $\lambda_s - \lambda_u < 0$, the azimuth angle $-\psi$ at the earth station is:

$$\psi = \arccos[\frac{\sin\varphi_u - \sin\varphi_s(\sin\varphi_s \sin\varphi_u + \cos\varphi_s \cos\varphi_u \cos(\lambda_s - \lambda_u))}{\cos\varphi_s\sqrt{1 - (\sin\varphi_s \sin\varphi_u + \cos\varphi_s \cos\varphi_u \cos(\lambda_s - \lambda_u))^2}}] \tag{2-7}$$

In addition, the link establishment strategy between the satellite and the ground station also needs to be considered. The link establishment strategy is limited by the minimum elevation angle, so the satellite-ground elevation angle needs to be calculated. The elevation angle is calculated by the formula (2-8):

$$\theta = \arctan[\frac{\sin\varphi_u \sin\varphi_s + \cos\varphi_u \cos\varphi_s \cos(\lambda_u - \lambda_s) - \dfrac{R_e}{h + R_e}}{\sqrt{1 - (\sin\varphi_u \sin\varphi_s + \cos\varphi_u \cos\varphi_s \cos(\lambda_u - \lambda_s))^2}}] \tag{2-8}$$

After calculation, the interference value I is obtained, and then a segmental function is used to judge the interval of this value, as shown in FIG. 6, and the calculated interference value is calibrated in the raster.

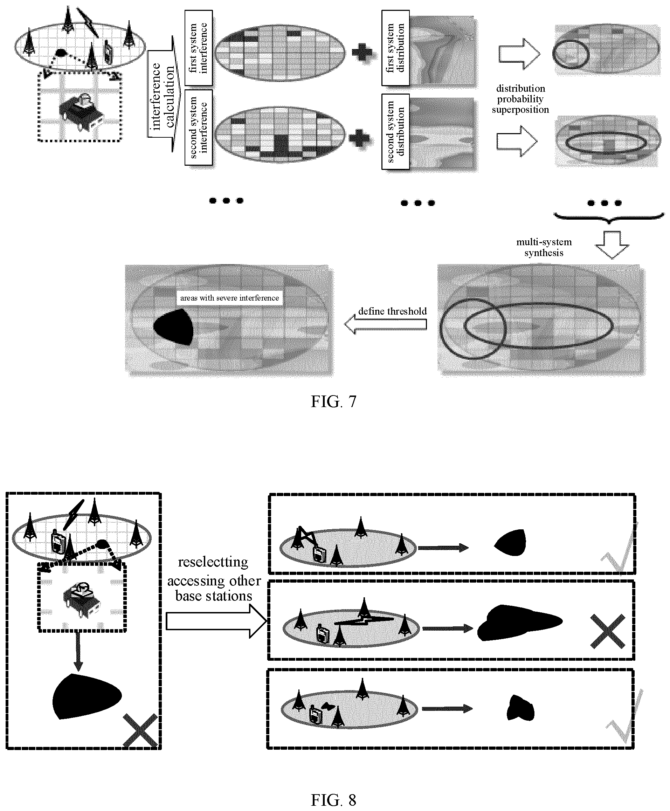

The steps of probability aggregation 403 are shown in FIG. 7.

After the interference calculation, it is possible to assume that the earth station in motion belonging to a certain NGSO satellite communication system in a certain raster will be interfered by the current 5G system. When all NGSO satellite communication systems in all rasters are calculated sequentially, as shown in FIG. 7, there are earth stations in motion in each raster in the base station cluster, which will cause serious interference to the earth stations in motion, and the probability distribution map of each system is superimposed to obtain an area where each earth station has a high probability of occurrence and will be seriously interfered. Multi-system integration is carried out according to the system service status. In the integration process, the number of inventory of the earth stations in motion in different systems may be considered and weighted for the multi-systems. That is, the systems with a large number of inventory have a high probability of occurrence, and the comprehensive weight may be appropriately increased. Finally, a threshold range is delineated by comprehensive weighting, and a size of the area of serious interference is obtained. In FIG. 7, the meaning of the size of the area is that if there is the earth station in motion in the area, there is a high probability that it will receive serious interference, and users in the system cannot get the services of the two systems at the same time.

The steps of the interference mitigation 404 are as shown in FIG. 8.

After probabilistic aggregation, the size of the severe interference area corresponding to the 5G user being served by the base station in the domain may be obtained. If the area is within an acceptable range, no other operations are considered necessary. If the area is larger than the acceptable range, other base stations in the domain will perform coordination, the link status of other base stations that may provide services in the domain respectively when providing services for the user is counted, and step 2 is input for recalculation. As shown in FIG. 8, the interference areas under different access schemes are obtained, and a reasonable access scheme is selected within the acceptable interference area.

Embodiments of the present disclosure provides an interference processing method for the NGSO satellite communication system in an environment with unknown information. Through the method in embodiments of the present disclosure, it is possible to comprehensively judge the access of 5G users based on the interference information such as the distribution of NGSO earth stations and the interference degree, which provides a method for realizing the frequency coordination between the NGSO satellite communication system and the ground communication system to avoid the occurrence of interference in the maximum probability.

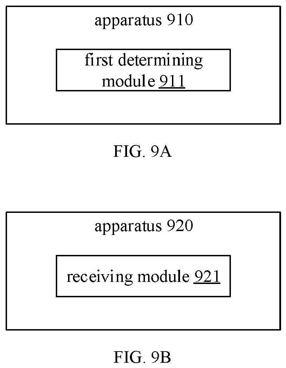

As shown in FIG. 9, embodiments of the present disclosure also provide an interference processing apparatus 910, which is performed by a terminal and includes:

a first determining module 911 configured to determine interference information between a non-geostationary orbit (NGSO) satellite communication system and a ground communication system in case of a presence of NGSO earth stations within a range of each of a plurality of sub-areas according to system parameters of the NGSO satellite communication system; in which the ground communication system comprises a plurality of base stations, and an area covered by the plurality of base stations comprise the plurality of sub-areas.

In some embodiments, the first determining module includes:

a first determining sub-module configured to determine a transmit antenna gain of a satellite in the NGSO satellite communication system, a receive antenna gain of the NGSO ground station and a path loss of the NGSO satellite communication system according to the system parameters;
a second determining sub-module configured to determine the interference information corresponding to a sub-area according to the transmit antenna gain, the receive antenna gain and the path loss.

In some embodiments, the first determining sub-module includes:

a first determining unit configured to determine an off-axis angle and an azimuth angle of the satellite in the NGSO satellite communication system, and a spatial distance between the satellite and the sub-area according to the system parameters;
a second determining unit configured to determine the transmit antenna gain according to the off-axis angle;
a third determining unit configured to determine the receive antenna gain according to the off-axis angle and the azimuth angle;
a fourth determining unit configured to determine the path loss according to the spatial distance.

In some embodiments, the first determining unit is further configured to:

determine an elevation angle of the satellite in the NGSO satellite communication system according to the system parameters;
determine the spatial distance according to the elevation angle.

In some embodiments, the system parameters include:

an instantaneous latitude and an instantaneous longitude of the satellite in the NGSO satellite communication system;
an instantaneous latitude and an instantaneous longitude of a satellite beam in the NGSO satellite communication system;
an instantaneous latitude and an instantaneous longitude of the NGSO ground station;
an orbital altitude of the satellite in the NGSO satellite communication system.

In some embodiments, the apparatus further includes:
a dividing module configured to divide the area covered by the plurality of base stations of the ground communication system into the plurality of sub-areas.

In some embodiments, the apparatus further includes:

a second determining module configured to determine an access scheme between a user equipment (LTE) of the ground communication system and the plurality of base stations in the area according to the interference information of the plurality of sub-areas.

In some embodiments, the second determining module includes:

a third determining sub-module configured to determine superimposed interference information according to the interference information corresponding to at least two NGSO satellite communication systems in the plurality of sub-areas;

a fourth determining sub-module configured to determine the access scheme between the UE of the ground communication system and the plurality of base stations in the area according to the superimposed interference information.

In some embodiments, the third determining sub-module is further configured to:

determine the superimposed interference information according to the interference information corresponding to the at least two NGSO satellite communication systems in the plurality of sub-areas and a distribution probability of the at least two NGSO satellite communication systems in the plurality of sub-areas.

In some embodiments, the second determining module includes:

a fifth determining sub-module configured to determine an interference probability corresponding to the NGSO satellite communication system and a communication link between the LTE and a currently accessed base station according to the interference information of the plurality of sub-areas;

a switching sub-module configured to switch the base station accessed by the UE in response to the interference probability being higher than a predetermined probability threshold.

In some embodiments, the switching sub-module is further configured to:

determine link status information in the case that the UE accesses each of the plurality of base stations in the area in response to the interference probability being higher than the predetermined probability threshold;

switch the base station accessed by the LTE according to the link status information.

In some embodiments, the area including the plurality of base stations includes a plurality of LTEs.

The second determining module includes:

determining the access schemes of the plurality of UEs according to the interference information of the plurality of sub-areas, respectively.

As shown in FIG. 9B, an embodiment of the present disclosure also provides an interference processing apparatus 920. The apparatus is performed by a terminal and includes:

a receiving module 921 configured to receive switching information for instructing the terminal to switch base stations; in which the switching information is issued by a network device according to interference information between a non-geostationary orbit (NGSO) satellite communication system and a ground communication system in case of a presence of NGSO earth stations within a range of each of sub-areas; in which the interference information is issued according to system parameters of the NGSO satellite communication system, and the interference information between the NGSO satellite communication system and the ground communication system; in which the ground communication system comprises a plurality of base stations, and an area covered by the plurality of base stations comprises a plurality of sub-areas.

In some embodiments, the switching information comprises an access scheme between the terminal and the plurality of base stations, and the access scheme is determined by the network device according to interference information of a plurality of sub-systems.

Regarding the apparatus in the above-mentioned embodiments, the specific manner in which each module executes operations has been described in detail in the method embodiments, and will not be described in detail here.

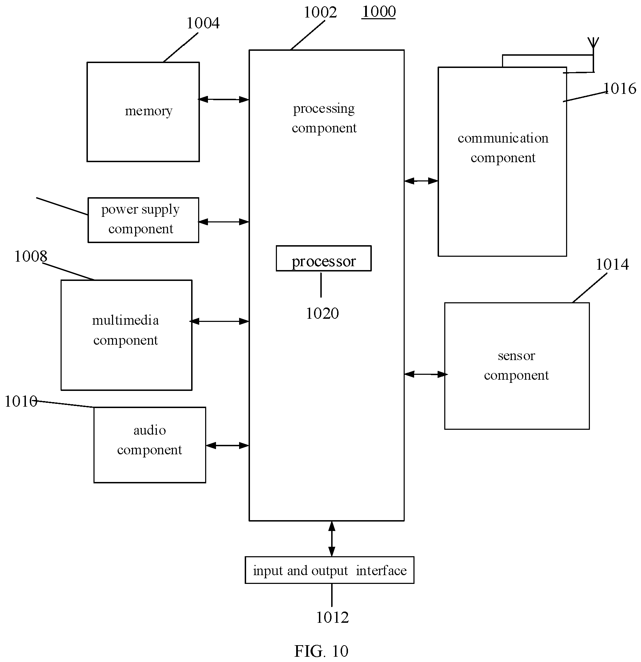

FIG. 10 is a block diagram illustrating a communication device according to an embodiment of the present disclosure. The communication device may be a terminal, such as the user equipment (UE) involved in any of the above-mentioned embodiments. For example, the communication device 1000 may be a mobile phone, a computer, digital broadcast user equipment, a messaging device, a game console, a tablet device, a medical device, a fitness device, a personal digital assistant, or the like.

Referring to FIG. 10, the communication device 1000 may include at least one of the following components: a processing component 1002, a memory 1004, a power supply component 1006, a multimedia component 1008, an audio component 1010, an input/output (I/O) interface 1012, a sensor component 1014, and a communication component 1016.

The processing component 1002 generally controls the overall operations of the communication device 1000, such as the operations associated with display, telephone calls, data communications, camera operations, and recording operations. The processing component 1002 may include at least one processor 1020 to execute instructions to complete all or part of the steps of the above-mentioned method. Additionally, the processing component 1002 may include at least one module which facilitate the interaction between the processing component 1002 and other components. For example, the processing component 1002 may include a multimedia module to facilitate the interaction between the multimedia component 1008 and the processing component 1002.

The memory 1004 is configured to store various types of data to support the operation of the communication device 1000. Examples of such data include instructions for any applications or methods operated on the communication device 1000, contact data, phonebook data, messages, pictures, videos, etc. The memory 1004 may be implemented using any type of volatile or non-volatile memory devices, or a combination thereof, such as a static random access memory (SRAM), an electrically erasable programmable read-only memory (EEPROM), an erasable programmable read only memory (EPROM), a programmable read only memory (PROM), a read-only memory (ROM), a magnetic memory, a flash memory, a magnetic or optical disk.

The power supply component 1006 provides power to various components of the communication device 1000. The power supply component 1006 may include a power management system, at least one power source, and any other components associated with the generation, management, and distribution of power in the communication device 1000.

The multimedia component 1008 includes a screen providing an output interface between the communication device 1000 and the user. In some embodiments, the screen may include a liquid crystal display (LCD) and a touch panel (TP). If the screen includes a touch panel, the screen may be implemented as a touch screen to receive input signals from the user. The touch panel includes at least one touch sensor to sense touches, swipes, and gestures on the touch panel. The touch sensors may not only sense a boundary of a touch or swipe action, but also sense awake time and a pressure associated with the touch or swipe action. In some embodiments, the multimedia component 1008 includes a front camera and/or a rear camera. The front camera and/or the rear camera may receive an external multimedia datum while the communication device 1000 is in an operation mode, such as a photographing mode or a video mode. Each of the front camera and the rear camera may be a fixed optical lens system or have focal and optical zoom capability.

The audio component 1010 is configured to output and/or input audio signals. For example, the audio component 1010 includes a microphone (MIC) configured to receive an external audio signal when the communication device 1000 is in an operation mode, such as a call mode, a recording mode, and a voice recognition mode. The received audio signal may be further stored in the memory 1004 or transmitted via communication component 1016 . In some embodiments, the audio component 1010 further includes a speaker to output audio signals.

The I/O interface 1012 provides an interface between the processing component 1002 and peripheral interface modules, such as keyboards, click wheels, buttons, and the like. These buttons may include, but are not limited to, a home button, a volume button, a starting button, and a locking button.

The sensor component 1014 includes at least one sensor to provide status assessments of various aspects of the communication device 1000. For example, the sensor component 1014 may detect an open/close status of the communication device 1000, relative positioning of components, e.g., the display and the keypad, of the communication device 1000, a change in position of the communication device 1000 or a component of the communication device 1000, a presence or absence of user contact with the communication device 1000, an orientation or an acceleration/deceleration of the communication device 1000, and a change in temperature of the communication device 1000. The sensor assembly 1014 may include a proximity sensor configured to detect the presence of nearby objects without any physical contact. The sensor component 1014 may also include a light sensor, such as a CMOS or CCD image sensor, for use in imaging applications. In some embodiments, the sensor component 1014 may also include an acceleration sensor, a gyroscope sensor, a magnetic sensor, a pressure sensor or a temperature sensor.

The communication component 1016 is configured to facilitate communication, wired or wireless, between the communication device 1000 and other devices. The communication device 1000 may access a wireless network based on a communication standards, such as WiFi, 2G or 3G, or a combination thereof. In illustrative embodiments, the communication component 1016 receives a broadcast signal or broadcast associated information from an external broadcast management system via a broadcast channel. In illustrative embodiments, the communication component 1016 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In illustrative embodiments, the communication device 1000 may be implemented with at least one application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above-described method.

In illustrative embodiments, there is also provided a non-transitory computer-readable storage medium including instructions, such as included in the memory 1004, executed by the processor 1020 in the communication device 1000, for performing the above-mentioned method. For example, the non-transitory computer-readable storage medium may be a ROM, a random access memory (RAM), a CD-ROM, a magnetic tape, a floppy disk, an optical data storage device, and the like.

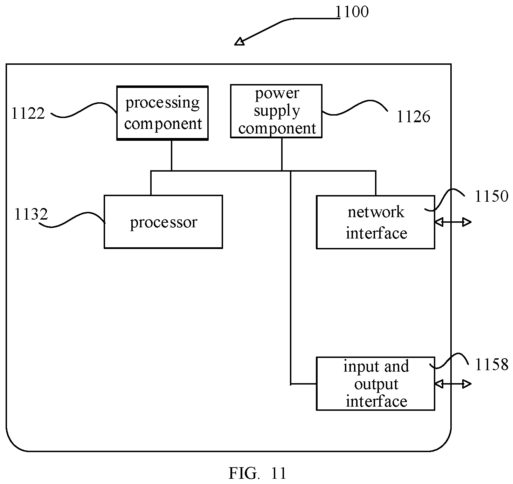

As shown in FIG. 11, an embodiment of the present disclosure shows another communication device. The communication device may be the base station involved in embodiments of the present disclosure and other network devices. For example, the communication device 1100 may be provided as a network device. Referring to FIG. 11, the communication device 1100 includes a processing component 1122 that further includes at least one processor, and a memory resource represented by a memory 1132 for storing instructions that may be executable by the processing component 1122 such as application programs. The application program stored in memory 1132 may include one or more modules each corresponding to a set of instructions. In addition, the processing component 1122 is configured to execute instructions to perform any one of the above-mentioned methods applied to the communication device.

The communication device 1100 may also include a power supply component 1126 configured to perform power management of the communication device 1100, a wired or wireless network interface 1150 configured to connect the communication device 1100 to a network, and an input and output (I/O) interface 1158. The communication device 1100 may operate based on an operating system stored in the memory 1132, such as Windows Server™, Mac OS X™, Unix™, Linux™, FreeBSD™ or the like.

Other embodiments of the present disclosure will be apparent to those skilled in the art from consideration of the specification and practice of the present disclosure disclosed here. The present disclosure is intended to cover any variations, uses, or adaptations of embodiments of the present disclosure following the general principles thereof and including such departures from embodiments of the present disclosure as come within known or customary practice in the art. It is intended that the specification and the examples be considered as illustrative only, with a true scope and spirit of the embodiments of the present disclosure being indicated by the following claims.

It will be appreciated that the present disclosure is not limited to the exact construction that has been described above and illustrated in the accompanying drawings, and that various modifications and changes may be made without departing from the scope thereof. It is intended that the scope of embodiments of the present disclosure only be limited by the appended claims.

**Claims**

1. An interference processing method, performed by a network device, comprising:
determining interference information between a non-geostationary orbit (NGSO) satellite communication system and a ground communication system in case of a presence of NGSO earth stations within a range of each of a plurality of sub-areas according to system parameters of the NGSO satellite communication system; wherein the ground communication system comprises a plurality of base stations, and an area covered by the plurality of base stations comprises the plurality of sub-areas.

2. The method according to claim 1, wherein determining the interference information between the NGSO satellite communication system and the ground communication system in case of the presence of the NGSO earth stations within the range of each of the plurality of sub-areas according to the system parameters of the NGSO satellite communication system comprises:

determining a transmit antenna gain of a satellite in the NGSO satellite communication system, a receive antenna gain of the NGSO ground station and a path loss of the NGSO satellite communication system according to the system parameters;
determining the interference information corresponding to a sub-area according to the transmit antenna gain, the receive antenna gain and the path loss.

3. The method according to claim 2, wherein determining the transmit antenna gain of the satellite in the NGSO satellite communication system, the receive antenna gain of the NGSO ground station and the path loss of the NGSO satellite communication system according to the system parameters comprises:

determining an off-axis angle and an azimuth angle of the satellite in the NGSO satellite communication system, and a spatial distance between the satellite and the sub-area according to the system parameters;
determining the transmit antenna gain according to the off-axis angle;

determining the receive antenna gain according to the off-axis angle and the azimuth angle;
determining the path loss according to the spatial distance.

4. The method according to claim 3, wherein determining the spatial distance according to the system parameters comprises:

   determining an elevation angle of the satellite in the NGSO satellite communication system according to the system parameters;
   determining the spatial distance according to the elevation angle.

5. The method according to claim 3, wherein the system parameters comprise:

   an instantaneous latitude and an instantaneous longitude of the satellite in the NGSO satellite communication system;
   an instantaneous latitude and an instantaneous longitude of a satellite beam in the NGSO satellite communication system;
   an instantaneous latitude and an instantaneous longitude of the NGSO ground station;
   an orbital altitude of the satellite in the NGSO satellite communication system.

6. The method according to any one of claims 1 to 5, further comprising:
   dividing the area covered by the plurality of base stations of the ground communication system into the plurality of sub-areas.

7. The method according to any one of claims 1 to 6, further comprising:
   determining an access scheme between a user equipment (LTE) of the ground communication system and the plurality of base stations in the area according to the interference information of the plurality of sub-areas.

8. The method according to claim 7, wherein determining the access scheme between the user equipment (LTE) of the ground communication system and the plurality of base stations in the area according to the interference information of the plurality of sub-areas comprises:

   determining superimposed interference information according to the interference information corresponding to at least two NGSO satellite communication systems in the plurality of sub-areas;
   determining the access scheme between the UE of the ground communication system and the plurality of base stations in the area according to the superimposed interference information.

9. The method according to claim 8, wherein determining the superimposed interference information according to the interference information corresponding to at least two NGSO satellite communication systems in the plurality of sub-areas comprises:
   determining the superimposed interference information according to the interference information corresponding to the at least two NGSO satellite communication systems in the plurality of sub-areas and a distribution probability of the at least two NGSO satellite communication systems in the plurality of sub-areas.

10. The method according to any one of claims 7 to 9, wherein determining the access scheme between the LTE of the ground communication system and the plurality of base stations in the area according to the interference information of the plurality of sub-areas comprises:

    determining an interference probability corresponding to the NGSO satellite communication system and a communication link between the UE and a currently accessed base station according to the interference information of the plurality of sub-areas;
    switching the base station accessed by the LTE in response to the interference probability being higher than a predetermined probability threshold.

11. The method according to claim 10, wherein switching the base station accessed by the LTE in response to the interference probability being higher than the predetermined probability threshold comprises:

    determining link status information in the case that the UE accesses each of the plurality of base stations in the area in response to the interference probability being higher than the predetermined probability threshold;

switching the base station accessed by the LTE according to the link status information.

12. The method according to any one of claims 7 to 11, wherein the area comprising the plurality of base stations comprises a plurality of LTEs;
determining the access scheme between the UE of the ground communication system and the plurality of base stations in the area according to the interference information of the plurality of sub-areas comprises:
determining the access schemes of the plurality of UEs according to the interference information of the plurality of sub-areas, respectively.

13. An interference processing method, performed by a terminal and comprising:
receiving switching information for instructing the terminal to switch base stations; wherein the switching information is issued by a network device according to interference information between a non-geostationary orbit (NGSO) satellite communication system and a ground communication system in case of a presence of NGSO earth stations within a range of each of sub-areas; wherein the interference information is issued according to system parameters of the NGSO satellite communication system, and the interference information between the NGSO satellite communication system and the ground communication system; wherein the ground communication system comprises a plurality of base stations, and an area covered by the plurality of base stations comprises a plurality of sub-areas.

14. The method according to claim 13, wherein the switching information comprises an access scheme between the terminal and the plurality of base stations, and the access scheme is determined by the network device according to interference information of a plurality of sub-systems.

15. An interference processing apparatus, performed by a network device, comprising:
a first determining module configured to determine interference information between a non-geostationary orbit (NGSO) satellite communication system and a ground communication system in case of a presence of NGSO earth stations within a range of each of a plurality of sub-areas according to system parameters of the NGSO satellite communication system; wherein the ground communication system comprises a plurality of base stations, and an area covered by the plurality of base stations comprise the plurality of sub-areas.

16. The apparatus according to claim 15, wherein the first determining module comprises:

a first determining sub-module configured to determine a transmit antenna gain of a satellite in the NGSO satellite communication system, a receive antenna gain of the NGSO ground station and a path loss of the NGSO satellite communication system according to the system parameters;
a second determining sub-module configured to determine the interference information corresponding to a sub-area according to the transmit antenna gain, the receive antenna gain and the path loss.

17. The apparatus according to claim 16, wherein the first determining sub-module comprises:

a first determining unit configured to determine an off-axis angle and an azimuth angle of the satellite in the NGSO satellite communication system, and a spatial distance between the satellite and the sub-area according to the system parameters;
a second determining unit configured to determine the transmit antenna gain according to the off-axis angle;
a third determining unit configured to determine the receive antenna gain according to the off-axis angle and the azimuth angle;
a fourth determining unit configured to determine the path loss according to the spatial distance.

18. The apparatus according to claim 17, wherein the first determining unit is further configured to:

determine an elevation angle of the satellite in the NGSO satellite communication system according to the system parameters;
determine the spatial distance according to the elevation angle.

19. The apparatus according to claim 17, wherein the system parameters comprise:

an instantaneous latitude and an instantaneous longitude of the satellite in the NGSO satellite communication system;
an instantaneous latitude and an instantaneous longitude of a satellite beam in the NGSO satellite communication system;
an instantaneous latitude and an instantaneous longitude of the NGSO ground station;
an orbital altitude of the satellite in the NGSO satellite communication system.

20. The apparatus according to any one of claims 17 to 19, further comprising:
a dividing module configured to divide the area covered by the plurality of base stations of the ground communication system into the plurality of sub-areas.

21. The apparatus according to any one of claims 15 to 20, further comprising:
a second determining module configured to determine an access scheme between a user equipment (UE) of the ground communication system and the plurality of base stations in the area according to the interference information of the plurality of sub-areas.

22. The apparatus according to claim 21, wherein the second determining module comprises:

a third determining sub-module configured to determine superimposed interference information according to the interference information corresponding to at least two NGSO satellite communication systems in the plurality of sub-areas;
a fourth determining sub-module configured to determine the access scheme between the LTE of the ground communication system and the plurality of base stations in the area according to the superimposed interference information.

23. The apparatus according to claim 22, wherein the third determining sub-module is further configured to:
determine the superimposed interference information according to the interference information corresponding to the at least two NGSO satellite communication systems in the plurality of sub-areas and a distribution probability of the at least two NGSO satellite communication systems in the plurality of sub-areas.

24. The apparatus according to any one of claims 21 to 23, wherein the second determining module comprises:

a fifth determining sub-module configured to determine an interference probability corresponding to the NGSO satellite communication system and a communication link between the LTE and a currently accessed base station according to the interference information of the plurality of sub-areas;
a switching sub-module configured to switch the base station accessed by the UE in response to the interference probability being higher than a predetermined probability threshold.

25. The apparatus according to claim 24, wherein the switching sub-module is further configured to:

determine link status information in the case that the LTE accesses each of the plurality of base stations in the area in response to the interference probability being higher than the predetermined probability threshold;
switch the base station accessed by the LTE according to the link status information.

26. The apparatus according to any one of claims 21 to 25, wherein the area comprising the plurality of base stations comprises a plurality of LTEs;
the second determining module comprises:
determining the access schemes of the plurality of UEs according to the interference information of the plurality of sub-areas, respectively.

27. An interference processing apparatus, applied to a terminal and comprising:
a receiving module configured to receive switching information for instructing the terminal to switch base stations;
wherein the switching information is issued by a network device according to interference information between a non-geostationary orbit (NGSO) satellite communication system and a ground communication system in case of a presence of NGSO earth stations within a range of each of sub-areas; wherein the interference information is issued according to system parameters of the NGSO satellite communication system, and the interference information between the NGSO satellite communication system and the ground communication system; wherein the ground communication system comprises a plurality of base stations, and an area covered by the plurality of base stations comprises a plurality of sub-areas.

28. The apparatus according to claim 27, wherein the switching information comprises an access scheme between the terminal and the plurality of base stations, and the access scheme is determined by the network device according to interference information of a plurality of sub-systems.

29. A communication device, at least comprising:

a processor; and
a memory for storing executable instructions runnable on the processor;
wherein the processor is configured to implement steps in the interference processing method according to any one of claims 1 to 12 or claims 13 to 14 when running the executable instructions.

30. A non-transitory computer-readable storage medium having stored therein computer executable instructions that, when executed by a processor, cause the interference processing method according to any one of claims 1 to 12 or claims 13 to 14 to be implemented.

FIG. 1

determining interference information between a non-geostationary orbit (NGSO) satellite communication system and a ground communication system in case of a presence of NGSO earth stations within a range of each of a plurality of sub-areas according to system parameters of the NGSO satellite communication system

S101

FIG. 2A

| terminal | | base station |
|---|---|---|

S201: receiving switching information for instructing the terminal to switch base stations

FIG. 2B

NGSO satellite

NGSO useful link

NGSO earth station

interfering link

5G base station

5G useful link

5G UE

FIG. 3

start

**initialization 401**

rasterization in domain

5G user polling in domain ← No — traverse all users? — Yes

**interference calculation 402**

NGSO system polling

data Import

simulation of interference calculation

interference classification processing

traverse all raster? — No / Yes

interference probability superposition

traverse all NGSO system? — No / Yes

multi NGSO system synthesis

**probability aggregation 403**

**interference mitigation 404**

is disturbance condition greater than a threshold? — No

formulate 5G re-access scheme

Yes

end

FIG. 4

rasterization of
position in
domain

FIG. 5

interference simulation
calculation

signal power
interference power
noise power

link

interference classification
processing

interval 1
interval 2
interval 3
interval 4
interval 5

FIG. 6

first system interference

second system interference

interference calculation

first system distribution

second system distribution

distribution probability superposition

multi-system synthesis

define threshold

areas with severe interference

FIG. 7

reselectting accessing other base stations

FIG. 8

apparatus 910

first determining
module 911

FIG. 9A

apparatus 920

receiving module 921

FIG. 9B

FIG. 10

1100

processing component

1122

power supply component

1126

processor

1132

network interface

1150

input and output interface

1158

FIG. 11

## INTERNATIONAL SEARCH REPORT

| | |
|---|---|
| International application No. | |
| | **PCT/CN2021/079271** |

| A. | CLASSIFICATION OF SUBJECT MATTER |
|---|---|
| | H04B 7/185(2006.01)i |

According to International Patent Classification (IPC) or to both national classification and IPC

| B. | FIELDS SEARCHED |
|---|---|

Minimum documentation searched (classification system followed by classification symbols)

H04B

Documentation searched other than minimum documentation to the extent that such documents are included in the fields searched

Electronic data base consulted during the international search (name of data base and, where practicable, search terms used)

EPTXT; USTXT; VEN; WOTXT; CNABS; CNTXT; CNKI: 参数, 基站, 确定, 地面, 子区域, 干扰, NGSO, 地球站, 信息, 卫星, sub-area, area, base station, interference, satellite, information, parameter, determine

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | CN 112152739 A (TSINGHUA UNIVERSITY) 29 December 2020 (2020-12-29) description, paragraphs 0027-0053, paragraphs 0118-0133 | 1, 6-7, 15, 20-21, 29-30 |
| Y | CN 111431585 A (TSINGHUA UNIVERSITY) 17 July 2020 (2020-07-17) description, paragraphs 0035-0046, paragraphs 0089-0110 | 1, 6-7, 15, 20-21, 29-30 |
| A | US 2012238203 A1 (VIASAT INC.) 20 September 2012 (2012-09-20) entire description | 1-30 |
| A | CN 109155669 A (TELESAT CANADA) 04 January 2019 (2019-01-04) entire description | 1-30 |

☐ Further documents are listed in the continuation of Box C.　　☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

"T"　later document published after the international filing date or priority date and not in conflict with the application but cited to understand the principle or theory underlying the invention

"X"　document of particular relevance; the claimed invention cannot be considered novel or cannot be considered to involve an inventive step when the document is taken alone

"Y"　document of particular relevance; the claimed invention cannot be considered to involve an inventive step when the document is combined with one or more other such documents, such combination being obvious to a person skilled in the art

"&"　document member of the same patent family

| Date of the actual completion of the international search | Date of mailing of the international search report |
|---|---|
| **25 October 2021** | **02 November 2021** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

EP 4 304 105 A1

**INTERNATIONAL SEARCH REPORT**
Information on patent family members

International application No.

**PCT/CN2021/079271**

| Patent document cited in search report | | | Publication date (day/month/year) | Patent family member(s) | | | Publication date (day/month/year) |
|---|---|---|---|---|---|---|---|
| CN | 112152739 | A | 29 December 2020 | CN | 112152739 | B | 28 May 2021 |
| CN | 111431585 | A | 17 July 2020 | CN | 111431585 | B | 13 November 2020 |
| US | 2012238203 | A1 | 20 September 2012 | US | 2012034866 | A1 | 09 February 2012 |
| | | | | ES | 2684443 | T3 | 02 October 2018 |
| | | | | EP | 3376686 | B1 | 19 February 2020 |
| | | | | BR | PI0818369 | B1 | 03 March 2020 |
| | | | | EP | 2206256 | A4 | 25 December 2013 |
| | | | | US | 8213929 | B2 | 03 July 2012 |
| | | | | ES | 2787389 | T3 | 16 October 2020 |
| | | | | RU | 2460212 | C2 | 27 August 2012 |
| | | | | RU | 2010118460 | A | 20 November 2011 |
| | | | | PL | 2206256 | T3 | 31 October 2018 |
| | | | | EP | 2206256 | B1 | 13 June 2018 |
| | | | | AU | 2008310760 | B2 | 30 January 2014 |
| | | | | EP | 3376686 | A1 | 19 September 2018 |
| | | | | DK | 2206256 | T3 | 03 September 2018 |
| | | | | BR | PI0818369 | A2 | 16 May 2017 |
| | | | | US | 2009093213 | A1 | 09 April 2009 |
| | | | | EP | 3726744 | A1 | 21 October 2020 |
| | | | | AU | 2008310760 | A1 | 16 April 2009 |
| | | | | US | 8068827 | B2 | 29 November 2011 |
| | | | | WO | 2009049090 | A1 | 16 April 2009 |
| | | | | US | 8897769 | B2 | 25 November 2014 |
| | | | | EP | 2206256 | A1 | 14 July 2010 |
| | | | | AU | 2008310760 | C1 | 02 October 2014 |
| CN | 109155669 | A | 04 January 2019 | US | 2019181946 | A1 | 13 June 2019 |
| | | | | MX | 2018012616 | A | 30 May 2019 |
| | | | | ZA | 201806772 | B | 31 July 2019 |
| | | | | EP | 3443688 | A1 | 20 February 2019 |
| | | | | PE | 20181880 | A1 | 05 December 2018 |
| | | | | JP | 2019514295 | A | 30 May 2019 |
| | | | | CA | 3020760 | A1 | 19 October 2017 |
| | | | | WO | 2017177343 | A1 | 19 October 2017 |
| | | | | EP | 3443688 | A4 | 18 March 2020 |
| | | | | EA | 201892334 | A1 | 29 March 2019 |
| | | | | CO | 2018011303 | A2 | 31 October 2018 |
| | | | | CA | 2927217 | A1 | 14 October 2017 |
| | | | | CL | 2018002927 | A1 | 25 January 2019 |
| | | | | AU | 2017251218 | A1 | 29 November 2018 |
| | | | | BR | 112018070877 | A2 | 05 February 2019 |

Form PCT/ISA/210 (patent family annex) (January 2015)

35